# EUROPÄISCHE PATENTSCHRIFT

(11) **EP 3 108 057 B1**
(45) Veröffentlichungstag und Bekanntmachung des Hinweises auf die Patenterteilung: **25.09.2024**
(21) Anmeldenummer: 15713685.4
(22) Anmeldetag: 26.03.2015
(51) Int. Cl.: D21F 7/02, D21B 1/32, D21B 1/34, D21D 5/06

(54) **VORRICHTUNG ZUR AUFBEREITUNG VON STOFFEN**
DEVICE FOR PROCESSING MATERIALS
DISPOSITIF DESTINÉ À LA PRÉPARATION DE SUBSTANCES

(30) Priorität: 28.04.2014 EP 14166181
(43) Veröffentlichungstag der Anmeldung: 28.12.2016
(73) Patentinhaber: Siemens Energy Global GmbH & Co. KG, 81739 München (DE)
(72) Erfinder: CHRIST, Walter, 91336 Heroldsbach (DE); SCHWARZ, Hermann, 97084 Würzburg (DE)
(86) Internationale Anmeldenummer: PCT/EP2015/056490
(87) Internationale Veröffentlichungsnummer: WO 2015/165659

(56) Entgegenhaltungen:
- DE-A1- 10 319 012
- DE-A1- 102010 043 612
- GB-A- 922 500

## Beschreibung

Die Erfindung betrifft eine Vorrichtung und ein Verfahren zur Aufbereitung von Stoffen, insbesondere von Rohstoffen bei der Papierherstellung. Weiter betrifft die Erfindung eine Antriebseinheit für eine solche Vorrichtung zur Aufbereitung von Stoffen und eine industrielle Anlage, insbesondere zur Herstellung von Papier mit einer solchen Antriebseinheit.

Aufbereitungsgefäße werden vielfach in industriellen Anlagen eingesetzt. Als Beispiel für ein Aufbereitungsgefäß sind ein Pulper, eine Auflösetrommel oder eine Kegelschleuder. Eine Auflösetrommel ist ein langes Rohr, welches drehbar gelagert ist, im Betrieb um eine Achse rotiert und mit Hilfe einer, nach innen gerichteten Struktur, vorzugsweise Altpapier und Wasser, vermengt.

DE 10 2009 035 247 A1 beschreibt einen Pulper und einen Antrieb, wobei zur Durchmischung ein Rotor dient, welcher in einer Wirkverbindung zu einem Motor steht. Nachteilig wird hier jedoch nicht das Pulper-Gefäß, sondern nur der Rotor angetrieben.

Zum Anrieb einer Auflösetrommel ist es weiter bekannt, die Auflösetrommel durch rotierende Räder an der Außenseite der Auflösetrommel anzutreiben, wobei die Räder berührungsbehaftet bei Drehung zu einer Drehbewegung entlang der Rotationsachse die Auflösetrommel in eine Drehbewegung versetzen. Die Räder, insbesondere zur verbesserten Haftung mit Reifen bestückt, werden regelmäßig gruppiert und durch einen Elektromotor und einem optional vorhandenen Getriebe angetrieben.

GB 922 500 A beschreibt eine Filtereinrichtung für Pulpe für die Herstellung von Papier.

Aufgabe der Erfindung ist es, einen verbesserten Antrieb für ein Aufbereitungsgefäß bereitzustellen.

Diese Aufgabe wird durch eine Vorrichtung zur Aufbereitung von Stoffen, insbesondere von Rohstoffen bei der Papierherstellung, aufweisend zumindest ein Aufbereitungsgefäß, wobei das Aufbereitungsgefäß mit Hilfe zumindest einer Auflage drehbar gelagert ist, gelöst. Dabei weist das Aufbereitungsgefäß zumindest einen Antriebsring auf, wobei der zumindest eine Antriebsring fest mit dem Aufbereitungsgefäß verbunden ist, wobei der Antriebsring Mittel zur Umwandlung von einem Magnetfeld in ein Drehmoment aufweist, wobei der Antriebsring im Zusammenwirken mit jeweils zumindest einem Statorelement zur Erzeugung einer Drehbewegung des Mischgefäßes vorgesehen ist, wobei das zumindest eine Statorelement Magnete und/oder Statorspulen aufweist und wobei die Magnete und/oder Statorspulen des zumindest einen Statorelements in Zusammenwirken mit den Mitteln zur Umwandlung eines Magnetfeldes zu einer Drehbewegung des zumindest einen Antriebsringes zur Erzeugung der Drehbewegung des Aufbereitungsgefäßes vorgesehen ist.

Diese Aufgabe wird weiter durch ein Verfahren zur Aufbereitung von Stoffen, insbesondere von Rohstoffen bei der Papierherstellung, gelöst, wobei zur Aufbereitung der Stoffe eine Vorrichtung gemäß einem der Ansprüche 1 bis 11 dient.

Diese Aufgabe wird zudem durch eine Verwendung einer Antriebseinheit für eine Vorrichtung zur Aufbereitung von Stoffen, insbesondere von Rohstoffen bei der Herstellung von Papier, in zumindest einem Aufbereitungsgefäß gelöst, wobei das zumindest eine Aufbereitungsgefäß drehbar gelagert ist und aufweist:
- Zumindest ein Statorelement, wobei das Statorelement Magnete und/oder Statorspulen aufweist,
- zumindest einen Antriebsring, wobei der Antriebsring zumindest einem Statorelement zugeordnet ist, wobei der Antriebsring Mittel zur Umwandlung eines Magnetfeldes in ein Drehmoment aufweist und wobei der zumindest eine Antriebsring zur Befestigung an dem zumindest einen Aufbereitungsgefäß vorgesehen ist,
- optional eine Steuerungseinrichtung, wobei die Steuerungseinrichtung zur Steuerung oder Regelung einer Drehbewegung des zumindest einen Aufbereitungsgefäß und optional zur Steuerung der Position und/oder Ausrichtung des zumindest einen Aufbereitungsgefäßes vorgesehen ist.

Die Aufgabe wird weiter durch eine Anlage, insbesondere zur Herstellung von Papier, vorzugsweise eine Papiermaschine, gelöst, wobei die Anlage zumindest eine solche Antriebseinheit oder eine Vorrichtung zur Aufbereitung von Stoffen aufweist.

Vorteilhafte Ausführungsbeispiele der Erfindung sind in den abhängigen Ansprüchen beschrieben.

Unter Aufbereitung versteht man das Durchmischen, Zerteilen, Zerfasern, Reinigen, Vermengen, Kneten, Trennen, Rösten, Erhitzen, Garen und/oder Extrahieren eines Stoffes oder Stoffgemisches.

Vorzugsweise findet eine solche Vorrichtung oder ein hier beschriebenes Verfahren Anwendung bei der Zerfaserung von Altpapier und/oder einer nachfolgenden Dickstoffereinigung bei der Aufbereitung von Altpapier.

Unter einem Aufbereitungsgefäß versteht man ein Gefäß, insbesondere in der Form einer Röhre, mit zumindest einer Einlass-öffnung und zumindest einer Auslassöffnung für den zumindest einen aufzubereitenden Stoff und ggf. für weitere Hilfsstoffe wie Wasser. In dem Aufbereitungsgefäß wird durch Drehung des Aufbereitungsgefäßes die sich im Inneren befindlichen Stoffe durchmischt bzw. durchmengt oder in sonstiger Weise aufbereitet. Ein solches Aufbereitungsgefäß ist beispielsweise ein Pulper, eine Auflösetrommel, eine Rösttrommel oder ein Zerfaserungssystem. Ein solches Aufbereitungsgefäß weist ggf. auf der Innenseite Elemente auf, welche für ein Durchmischen und ggf. einen Transport von Stoffen durch das Aufbereitungsgefäß von einem Einlass zu einem Auslass und/ oder umgekehrt dienen.

Unter einem Mittel zur Umwandlung eines Magnetfeldes in ein Drehmoment, insbesondere ein Drehmoment des Antriebsringes, versteht man eine technische Einrichtung, welche durch die Wechselwirkung mit dem Magnetfeld eine Kraft auf den Antriebsring wirken lässt. Ein Mittel kann beispielsweise ein Permanentmagnet, eine ggf. stromdurchflossene Spule sowie eine Erhöhung respektive Aussparung eines ferromagnetischen Materials sein. Eine Erhöhung respektive Aussparung dient dabei zur Umleitung eines magnetischen Feldes, beispielsweise durch Reluktanzwirkung.

Ein Antriebsring ist ein Ring, vorzugsweise ein Blechpaket aufweisend, welcher fest mit dem Aufbereitungsgefäß verbunden ist. Bei Bedarf weist der Antriebsring an einer Innenseite eine Isolation gegen eine Übertragung von Wärme auf. Besonders vorteilhaft ist eine solche Isolation bei einem Aufbereitungsgefäß, welches eine hohe Temperatur aufweist. Gegebenenfalls vorhandene Antriebsmagnete (Permanentmagnete) auf dem Antriebsring werden so vor Wärmeeinwirkung des Aufbereitungsgefäßes geschützt. Vorteilhaft wird ein Antriebsring auf ein vorhandenes Aufbereitungsgefäß aufgebracht und mittels Befestigungselemente oder einem thermischen Schrumpfverfahren fest mit dem Aufbereitungsgefäß verbunden. Als Mittel zur Umwandlung des Magnetfeldes in ein Drehmoment weist der Antriebsring, vorteilhaft an seinen Außenseiten, Antriebsmagnete (Permanentmagnete) auf. Die Antriebsmagnete sind ggf. durch Antriebsspulen in ihrer Wirkung verstärkt. Die Antriebsspulen sind dabei stromdurchflossen, wobei der Stromfluss durch eine Verbindung mit Schleifringen, wie bei einem Elektromotor, in die Spulen geführt wird.

Vorteilhaft sind in einem Antriebsring oder einem Aufbereitungsgefäß Kurzschlussläufer (oder ähnliche Spulen) integriert, welche als Mittel zur Erzeugung einer Kraft durch eine Wechselwirkung mit einem Magnetfeld dienen. Für eine besonders kostengünstige Lösung ist es auch möglich, dass der Antriebsring Aussparungen an vorgesehenen Stellen aufweist, so dass ein von außen anliegendes Magnetfeld eine Reluktanzwirkung hervorruft.

Anstelle eines Antriebsringes ist auch ein Aufbereitungsgefäß denkbar, welches selbst Mittel zur Erzeugung einer Kraft oder eines Drehmomentes durch die Wechselwirkung mit einem Magnetfeld aufweist. Insbesondere bei einem neuen Aufbereitungsgefäß sind solche Mittel anstelle eines eigenen Antriebsringes ggf. kostengünstiger und/oder platzsparender.

Der Antriebsring und/oder das Aufbereitungsgefäß kann auch weitere, dem Fachmann bekannte aber hier nicht aufgezeigte Mittel aufweisen, um ein Drehmoment aus einem vorliegenden Magnetfeld zu induzieren.

Das Statorelement weist vorteilhaft Elektromagnete auf, welche jeweils aus einer Statorspule, wie einem Kern, bestehen. Das ausgehende Magnetfeld der Elektromagnete kann durch einen Permanentmagnet, der an der Außenseite des Stators, zum Antriebsring hin gerichtet, verstärkt werden. Das Starterelement weist vorteilhaft ein Blechpaket auf. Das Statorelement weist ggf. ein Wälzlager, insbesondere ein Zylinderrollenlager, auf, so dass das Aufbereitungsgefäß bezüglich des Statorelements drehbar gelagert ist und einen konstanten Abstand zum Statorelement einhält. Anstelle von Wälzlagern, die einem Statorelement und/oder dem Aufbereitungsgefäß zugeordnet sind, ist es auch möglich, dass das Aufbereitungsgefäß durch zumindest eine separate Auflage drehbar gelagert ist und in seiner Position und Ausrichtung gehalten wird. Ein Statorelement kann entweder den, dem Statorelement zugeordneten, Antriebsring umfassen oder durch eine, dem Antriebsring zugewandten, Fläche teilweise abdecken.

Durch ein zeitabhängiges, insbesondere periodisch verlaufendes Magnetfeld, welches durch Elektromagnete des zumindest einen Statorelements erzeugt werden, wird der Antriebsring und somit das in Wirkverbindung mit dem Antriebsring stehende Aufbereitungsgefäß in eine Rotationsbewegung versetzt. Der zeitliche Verlauf des Magnetfeldes steuert dabei die Drehzahl des Antriebsringes und damit die Drehzahl des Aufbereitungsgefäßes. Hierbei kann die Frequenz des periodisch verlaufenden Magnetfeldes die Drehzahl beeinflussen. Die Kraftübertragung erfolgt dabei analog der Kraftübertragung eines Elektromotors, insbesondere eines Ringmotors.

Anstelle einer für das Aufbereitungsgefäß maßgeschneiderte Antriebseinheit zu verwenden, ist auch ein Antrieb des Aufbereitungsgefäßes mittels eines handelsüblichen Ringmotors möglich. Der Einsatz eines Ringmotors ist eine besonders kostengünstige Antriebseinheit für ein solches Aufbereitungsgefäß. Der Ringmotor ist vorteilhaft auf der Außenseite mit dem Untergrund zu verbinden und auf seiner Innenseite vorteilhaft mit dem Aufbereitungsgefäß in einer Wirkverbindung stehend.

Besonders vorteilhaft ist eine solche Vorrichtung zur Aufbereitung von Stoffen, da der Antriebsring nicht über Reifen oder ein Zahnrad mit einem Elektromotor verbunden ist, sondern lediglich durch Zusammenwirken des zumindest einen Statorelements angetrieben wird. Somit fallen Getriebe, Antriebsräder sowie ggf. weitere Zahnräder als mögliche Fehlerquellen weg. Die einfache und direkte Ansteuerung sorgt für Langlebigkeit und eine einfache Wartung. Zudem ist ein hoher Drehzahlbereich von 1 bis etwa 2.000 Umdrehungen pro Minute für das Aufbereitungsgefäß für eine Vielzahl von Anwendungen vorteilhaft.

Eine Antriebseinheit ist vorteilhaft bei einer bestehenden Vorrichtung zum Durchmischen von Stoffen, insbesondere bei einem Pulper, bei einer Auflösetrommel, bei einem Zerfaserungssystem und/oder bei einer Kegelschleuder, nachrüstbar. Die Funktionsweise einer solchen Antriebseinheit entspricht der Funktionsweise eines Ringmotors, der einem Aufbereitungsgefäß zugeordnet ist.

Eine solche Antriebseinheit weist vorteilhaft folgende Vorteile auf:
- Energiesparender Betrieb,
- erhöhte Funktionalität,
- erhöhte Lebensdauer,
- erhöhter Drehzahlbereich,
- Möglichkeit eines bewegbaren Antriebs,
- variable Drehachse, insbesondere vertikale Drehachse des Aufbereitungsgefäßes,
- Wegfall von bisher notwendigen Getrieben, Zahnkränzen, Transmissionsriemen und/oder Reifen.

Besonders vorteilhaft ist das Verfahren zur Aufbereitung von Stoffen mit einer solchen Vorrichtung, da durch die Verwendung des direkten Antriebs eine besonders gleichmäßige, in einem großen Bereich einstellbare, Drehgeschwindigkeit des zumindest einen Aufbereitungsgefäßes vorliegt. Vorteilhaft an dem Verfahren ist die Möglichkeit einer Veränderung der Position und Ausrichtung des zumindest einen Aufbereitungsgefä-ßes. Eine solche Veränderung der Position und Ausrichtung erfolgt vorteilhaft durch die Steuerungseinrichtung, welche sowohl die Drehzahl, die Drehrichtung als auch die Ausrichtung respektive Position des Aufbereitungsgefäßes steuert bzw. regelt. Somit kann eine verbesserte Aufbereitung des zumindest einen Stoffes mit Hilfe des Aufbereitungsgefäßes erfolgen, welches in seiner Position und Ausrichtung veränderbar ist.

In einer vorteilhaften Ausgestaltung weist die Vorrichtung einen Antriebsring als Mittel zur Umwandlung des Magnetfeldes in ein Drehmoment Antriebsmagnete, Aussparungen und/oder zumindest eine Antriebspule auf.

Vorteilhaft sind die Antriebsmagnete, die zumindest eine Antriebsspule sowie ggf. zusätzliche magnetische Materialien sowie die Aussparungen in das Blechpaket des Antriebsringes integriert. Vorzugsweise sind die Antriebsmagnete oder die Antriebsspule lösbar mit dem Antriebsring befestigt, so dass die Antriebsmagnete bei Abnahme ihrer abgegebenen Magnetfeldstärke ausgewechselt werden können.

Die vorstehend ausgeführten Mittel zur Umwandlung des Magnetfeldes in ein Drehmoment dienen zur Wechselwirkung mit dem externen Magnetfeld, welches von dem zumindest einen Statorelement ausgeht. Aufgrund der Wechselwirkung erfolgt eine Kraftwirkung auf die Mittel zur Umwandlung des Magnetfeldes in ein Drehmoment (auch vereinfacht als Mittel bezeichnet). Die Kraftwirkung auf die Mittel induziert ein Drehmoment auf den Antriebsring und somit auf das Aufbereitungsgefäß. Es können auch weitere, dem Fachmann bekannte Mittel eingesetzt werden.

Besonders vorteilhaft ist eine solche Ausgestaltung, da technische Expertise aus der Entwicklung von elektrischen Maschinen direkt auf die Gestaltung und Funktionalität des Antriebsringes angewendet werden können.

In einer weiteren vorteilhaften Ausgestaltung ist eine Isolation zwischen dem Antriebsring und dem Aufbereitungsgefäß vorgesehen.

Als Isolation dient vorteilhaft eine Schicht mit einer geringen thermischen Leitfähigkeit. Die Isolation besteht beispielsweie aus einem Mineralstoff, einem Kunststoff oder einem textilen Werkstoff, welche zwischen der Außenseite des Aufbereitungsgefäßes und der Innenseite des Antriebsrings lokalisiert ist. Weiter können auch Asbest, Holz, Kunststoffe und/oder Lufteinschlüsse als Isolierung dienen. Die Isolation kann zudem mit Hilfe eines Abstandshalters erfolgen, wobei der zumindest eine Abstandshalter für eine Luftschicht zwischen dem Aufbereitungsgefäß und dem Antriebsring sorgt und vorteilhaft eine schlechte thermische Leitfähigkeit aufweist. Die Isolation verhindert vorteilhaft eine starke Erwärmung des Antriebsringes, falls das Aufbereitungsgefäß eine erhöhte Außentemperatur aufweist. Andererseits ist auch das Aufbereitungsgefäß von einer lokalen Wärmeeinwirkung durch den Antriebsring geschützt.

Bei einer weiteren vorteilhaften Ausgestaltung der Vorrichtung deckt zumindest eines der Statorelemente den Antriebsring, insbesondere winkelbezogen, nur teilweise ab.

Bei einer vertikalen Lage des zumindest einen Aufbereitungsgefäßes ist ein Statorelement vorteilhaft, welches das Aufbereitungsgefäß und den Antriebsring zumindest weitgehend umschließt. Durch ein solches Statorelement wird das zumindest eine Aufbereitungsgefäß in seiner vertikalen Position gehalten. Das Aufbereitungsgefäß ist vorteilhaft mittels eines Wälzlagers drehbar gelagert. Falls das Aufbereitungsgefäß vorwiegend horizontal oder leicht gewinkelt verläuft, kann jedoch besonders vorteilhaft zumindest ein Statorelement eingesetzt werden, welches den Antriebsring nur abschnittsweise abdeckt. Unter einer teilweisen Abdeckung kann auch die Abdeckung eines radialen Teilbereiches des Antriebsringes und/ oder die teilweise Abdeckung eines Teilbereichs in der Breite des Antriebringes verstanden werden. Besonders vorteilhaft weist das Statorelement einen Innenkreiswinkel von etwa 180° auf. Durch das lediglich teilweise Abdecken ist weniger Material für das zumindest eine Statorelement notwendig, insbesondere weniger Statormagnete und ein kleineres Blechpaket.

Ein Statorelement, welches den Antriebsring und das Aufbereitungsgefäß umschließt, kann ein höheres Drehmoment auf den Antriebsring und somit auf das Aufbereitungsgefäß bewirken. Bei der Verwendung von Wälzlagern oder anderen Auflagen an dem zumindest einen Statorelement ist eine feste Ausrichtung des Aufbereitungsgefäßes und somit eine stabile Konstruktion der Vorrichtung zur Aufbereitung von Stoffen möglich.

Bei einer weiteren vorteilhaften Ausgestaltung der Vorrichtung sind das Aufbereitungsgefäß und die Statorelemente in Position und/oder Ausrichtung veränderbar.

Vorteilhaft ist das Statorelement nicht fix mit dem Untergrund verbunden, sondern ist mit Hilfe eines Verstellglieds und ggf. eines Gelenkes, insbesondere einem Hydraulikzylinder und/oder einer elektrisch betriebenen Einrichtung, in Position und Ausrichtung veränderbar. Durch eine veränderbare Ausrichtung des Aufbereitungsgefäßes kann eine Lokalisierung von Stoffen in dem Aufbereitungsgefäß gezielt verändert werden. Gegebenenfalls sind für eine Veränderung der Ausrichtung auch zumindest ein Verstellglied und/oder zumindest ein Gelenk für die Auflage notwendig. Eine Veränderung der Ausrichtung kann auch im Betrieb der Vorrichtung, also während der Aufbereitung des zumindest einen Stoffes, erfolgen.

In einer weiteren vorteilhaften Ausgestaltung ist für die Positionierung des Aufbereitungsgefäßes die zumindest eine Auflage vorgesehen.

Unter einer Auflage versteht man eine Vorrichtung, auf der das Aufbereitungsgefäß und ggf. der Antriebsring in seiner horizontalen bzw. vertikalen Position gestützt wird. Weiter dient die Auflage zur räumlichen Fixierung der Drehachse des Antriebsringes bzw. des Aufbereitungsgefäßes. Die Auflage unterstützt vorteilhaft die Rotation des Aufbereitungsgefäßes um zumindest eine Rotationsachse. Eine Auflage kann ein Wälzlager oder ein Teil eines solchen Wälzlagers aufweisen. Besonders vorteilhaft für ein Aufbereitungsgefäß mit hohem Gewicht ist ggf. ein, mit einer weichen Beschichtung versehenen, drehbar aufgehängter Metallzylinder. Alternativ kann auch zumindest eine weitere technische Einrichtung wie eine nicht notwendig angetriebene Antriebsvorrichtung gemäß dem derzeitigen Stand der Technik die Auflage in ihrer Aufgabe unterstützen.

In einer weiteren vorteilhaften Ausgestaltung der Vorrichtung ist zumindest eine Auflage Teil des zumindest einen Statorelements.

Vorteilhaft erfolgt die horizontale Fixierung des Mischgefä-ßes mittels eines Wälzlagers, wobei das Wälzlager und/oder ein Kugellager fest mit dem Starterelement verbunden sind oder Teil des Statorelements sind.

In einer weiteren vorteilhaften Ausgestaltung der Vorrichtung zur Aufbereitung von Stoffen ist zwischen einem Aufbereitungsgefäß und einem weiteren Aufbereitungsgefäß ein Verbindungsglied vorgesehen.

Das Verbindungsglied dient zur Verknüpfung eines Aufbereitungsgefäßes mit zumindest einem weiteren Aufbereitungsgefäß. Vorteilhaft kann ein Stoffstrom mit Hilfe des Verbindungsgliedes von einem Aufbereitungsgefäß in ein anderes Aufbereitungsgefäß geleitet werden. Das Verbindungsglied dient vorteilhaft als Auflage für zumindest ein Aufbereitungsgefäß, welches mit dem Verbindungsglied in Wechselwirkung steht. Das Verbindungsglied dient weiter vorteilhaft zur Umlenkung des Stoffstromes von einem horizontal verlaufenden Aufbereitungsgefäß in ein weiteres Aufbereitungsgefäß, insbesondere bei gewinkelten Rotationsachsen der Aufbereitungsgefäße, die dem Verbindungsglied zugeordnet sind. Vorteilhaft ist ein solches Aufbereitungsgefäß mit veränderbaren Eingangs- und Ausgangselementen ausgestattet, wobei sowohl die Größe als auch die Ausrichtung der Eingänge und/oder Ausgänge an den Aufbereitungsgefäßen variabel gestaltet sein können. Ein solches Verbindungsglied ermöglicht eine besonders einfache Veränderung der Ausrichtung bzw. Positionierung eines Aufbereitungsgefäßes im Vergleich zu einem weiteren Aufbereitungsgefäß, falls beide Aufbereitungssysteme über das Verbindungsglied verbunden sind. Vorteilhaft können auch mehrere Aufbereitungsgefäße über ein solches Verbindungsglied in einer Wirkverbindung stehen. Denkbar ist eine Kopplung der Rotationsbewegungen, insbesondere durch ein Getriebe.

In einer weiteren vorteilhaften Ausgestaltung ist zumindest eines der Aufbereitungsgefäße ein Pulper, eine Auflösetrommel oder eine Kegelschleuder.

Ein Pulper oder eine Auflösetrommel dient zur Durchmischung und zur Herstellung von Pulpe bei der Herstellung von Papier aus Holz, Zellstoff und/oder Altpapier, ggf. unter Zugabe von Hilfsstoffen, wie Wasser. Eine Auflösetrommel besteht oft aus einem langen Rohr, wobei an den Innenseiten der Auflösetrommel metallische Einsätze zur Durchmischung der eingebrachten Stoffe sowie zur Durchführung des Stoffstromes durch die Auflösetrommel dienen.

Weitere Einsatzgebiete einer solchen Vorrichtung zur Aufbereitung von Stoffen, insbesondere einer solchen Antriebseinheit, sind denkbar in der Lebensmittelherstellung, in der chemischen Industrie sowie der Trennung von Abfällen in einem Aufbereitungsgefäß. Weiter kann eine Antriebseinheit gemäß dem Anspruch 12 zur Trennung von Stoffen, beispielsweise analog einer Kegelschleuder, Einsatz finden.

In einer weiteren vorteilhaften Ausgestaltung weist die Vorrichtung zur Aufbereitung von Stoffen und/oder die Antriebseinheit eine Steuerungseinheit auf, wobei die Steuerungseinheit zur Steuerung der Drehbewegung, insbesondere der Drehzahl und/oder des Drehmoments, des zumindest einen Aufbereitungsgefäßes vorgesehen ist.

Die Steuerungseinrichtung steuert die Drehzahl, das Drehmoment, die Position und/oder die Ausrichtung des zumindest einen Aufbereitungsgefäßes. Mittels Sensoren, beispielsweise zur Bestimmung von Temperatur und/oder Stoffzusammensetzung in dem Aufbereitungsgefäß lässt sich eine Vorrichtung zur Aufbereitung von Stoffen in Drehzahl, Drehmoment, Drehrichtung und/oder Ausrichtung des zumindest einen Aufbereitungsgefäßes vorteilhaft regeln. Vorteilhaft ist dazu die Steuerungseinrichtung mit einer Regeleinrichtung zu ergänzen. Für eine Regelung der Vorrichtung oder der Antriebseinheit werden die Größen, die mit den Sensoren ermittelt werden, an die Steuerungseinheit übertragen und wirken auf Ausgabe der Steuerungseinrichtung ein.

Eine Steuerungseinrichtung steuert dann anhand der Vorgaben von der Steuerung und/oder den Sensoren, insbesondere mit Hilfe eines Frequenzumrichters, die Drehzahl des zumindest einen Aufbereitungsgefäßes durch die Wahl der Frequenz der Spannung, welche an den Statorspulen und/oder an den Antriebsspulen anliegt. Mittels einer solchen Steuerungseinrichtung lässt sich vorteilhaft auch ein handelsüblicher Ringmotor steuern.

In einer weiteren vorteilhaften Ausgestaltung steuert oder regelt die Steuerungseinrichtung zudem die Positionierung und/oder die Ausrichtung des zumindest einen Aufbereitungsgefäßes.

Die Positionierung des zumindest einen Aufbereitungsgefäßes erfolgt vorteilhaft durch einen oder mehrere Hydraulikzylinder, wobei die Ansteuerung des Hydraulikzylinders (beispielsweise die Ölpumpe(n)) mit der Steuerungseinrichtung verbunden ist. Bei der Positionierung bzw. Ausrichtung des zumindest einen Aufbereitungsgefäßes mit Hilfe eines Servomotors oder einer anderen elektrischen Positionierungseinrichtung erfolgt die Steuerung derselben vorteilhaft ebenfalls mit Hilfe der Steuerungseinrichtung.

Vorteilhaft ist eine Antriebseinheit, bestehend aus zumindest einem Antriebsring, einem zumindest einen zugeordneten Statorelement sowie ggf. der Steuerungseinrichtung bei einer bestehenden industriellen Anlage, insbesondere bei einer Papiermaschine, nachrüstbar.

Zusammenfassend weist eine erfindungsgemäße Vorrichtung zur Aufbereitung von Stoffen sowie eine erfindungsgemäße Antriebseinheit für ein Aufbereitungsgefäß folgende Vorteile auf:
- Wegfall einer Mehrzahl von Antriebselementen,
- Anwendungsmöglichkeit eines handelsüblichen Ringmotors anstelle eines einzeln gefertigten Antriebsringes und zugehörigen Statorelementen,
- ein hoher Drehzahlbereich des zumindest einen Aufbereitungsgefäßes,
- die Möglichkeit, ein Aufbereitungsgefäß in jeder Position und Ausrichtung anzutreiben/zu verwenden, sowie
- ein hoher Wirkungsgrad durch Wegfall von reibungsbehaftete Wechselwirkung zwischen Komponenten.

Im Folgenden wird die Erfindung anhand des in der Figur dargestellten Ausführungsbeispiels näher beschrieben und erläutert. Es zeigen:
- FIG 1: eine Vorrichtung zur Aufbereitung von Stoffen,
- FIG 2: eine Draufsicht auf ein Statorelement und ein Aufbereitungsgefäß,
- FIG 3: einen Schnitt durch ein Statorelement mit einem Antriebsring und einem Aufbereitungsgefäß,
- FIG 4: einen Schnitt durch einen Teil einer Vorrichtung zur Aufbereitung von Stoffen,
- FIG 5: eine Vorrichtung zur Aufbereitung von Stoffen mit zwei Aufbereitungsgefäßen sowie
- FIG 6: eine ausrichtbare Vorrichtung zur Aufbereitung von Stoffen.

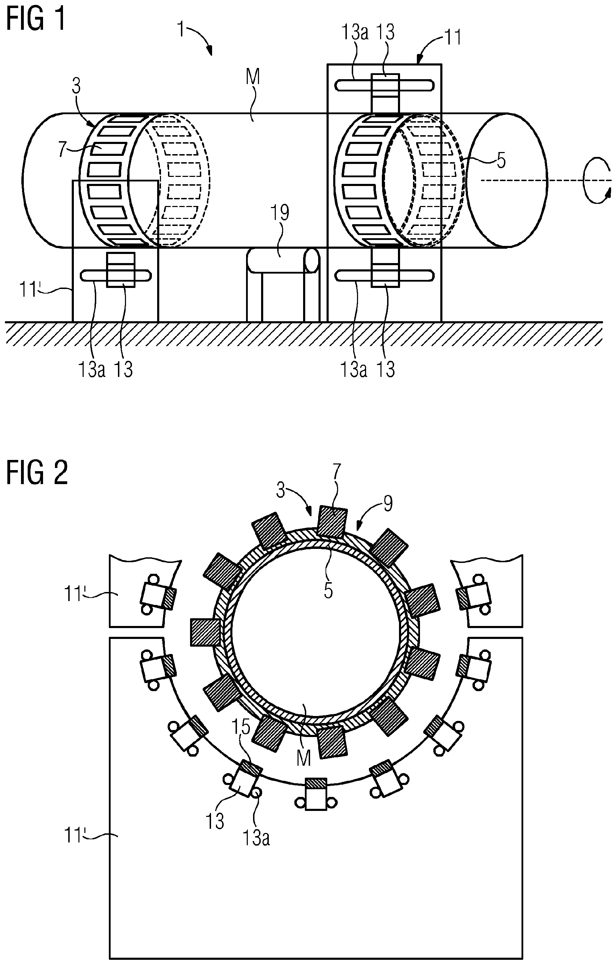

FIG 1 zeigt eine Vorrichtung zur Aufbereitung von Stoffen.

Die Aufbereitung der Stoffe findet in dem Aufbereitungsgefäß M statt. Das Aufbereitungsgefäß M wird durch (zumindest) eine Auflage 19 in einer horizontalen Ausrichtung gehalten. Die Auflage 19 sowie ggf. weitere Auflagen 19, wie Wälzlager, halten das Aufbereitungsgefäß M an zumindest drei Stellen drehbar in der vorgesehenen Ausrichtung und Position. Eine Auflage 19 weist vorteilhaft eine bewegliche Rolle auf, wobei die Rolle ggf. zur Verminderung von Reibung mit einer weichen Schicht beschichtet ist. Durch das Zusammenwirken des Antriebsringes 3 mit einem, dem Antriebsring 3 zugeordneten Statorelement 11, 11` wird ein Drehmoment auf den Antriebsring 3 und somit auf das Aufbereitungsgefäß M induziert. Das Drehmoment, ausgelöst durch das Magnetfeld, welches in zumindest einem Statorelement 11, 11` und/oder durch den Antriebsring 3 erzeugt wird, führt zu einer Drehbewegung des Aufbereitungsgefäßes M. Die Drehrichtung ist durch den halbkreisförmigen Pfeil auf der linken Seite des Aufbereitungsgefäßes M symbolisiert. Beide Statorelemente 11, 11` weisen Elektromagnete 13 auf. Die Elektromagnete 13 bestehen aus einer Spule 13a und ggf. jeweils einem zusätzlichen Statorelementseitigen Permanentmagnet 15 (hier nicht gezeigt).

Das magnetische Feld, welches insbesondere von den Elektromagneten 13 des jeweiligen Statorelements ausgeht, wird mit Hilfe des Antriebsringes 3 in ein Drehmoment gewandelt. Als Elektromagnete 13 können die Spulen 13a entlang der Breite des Statorelements 11, 11` verlaufen. Weiter ist es möglich, dass die Spulen 13a nur um einen Teil der Breite des Statorelements 11, 11` durchlaufen. Zur Umwandlung des Magnetfeldes in eine Kraft und/oder ein Drehmoment weist der Antriebsring 3 Mittel 7, 9 zur Umwandlung des Magnetfeldes in eine Drehbewegung des Aufbereitungsgefäßes M auf. Gezeigt sind hier als Mittel zur Umwandlung Antriebsmagnete 7, welche in den Antriebsring 3 integriert sind. Die Antriebsmagnete 7 wechseln sich in ihrer, nach außen gerichteten Polstellung (N-Pol, S-Pol), ab. Der Antrieb des Aufbereitungsgefäßes M erfolgt somit analog einer elektrisch rotierenden Maschine, insbesondere mit Hilfe eines Ringmotors. Zwischen den Antriebsringen 3 und dem Aufbereitungsgefäß M befindet sich eine Isolation 5. Die Isolation 5 stellt eine Schicht dar, vorteilhaft aus einem anorganischen, thermisch schlecht leitenden Material, welche zwischen dem Antriebsring 3 und dem Aufbereitungsgefäß M lokalisiert ist. Durch den Isolator 5 wird der Antriebring vorteilhaft am Aufbereitungsgefäß M befestigt.

FIG 2 zeigt eine Draufsicht auf ein Statorelement 11` und ein Aufbereitungsgefäß M mit Antriebsring 3. Das hier gezeigte Statorelement 11` weist eine halbkreisförmige Aussparung auf. Gegebenenfalls ist das Statorelement durch zumindest ein weiteres Statorelement 11` erweiterbar, wie angedeutet. Die Statorelemente 11` können in einem Abstand voneinander montiert sein oder sich berühren und/oder miteinander eine feste Verbindung eingehen. Wie bereits vorstehend ausgeführt, reicht ggf. ein Statorelement 11` aus. Der Radius der halbkreisförmigen Aussparungen ist dergestalt gewählt, dass die Außenseite des Antriebsringes 3, welche auf dem Aufbereitungsgefäß M befestigt ist, einen konstanten Abstand zu der Innenseite der halbkreisförmigen Aussparung des Statorelements 11` aufweist. Auf der Innenseite der halbkreisförmigen Aussparung des Statorelements 11` weist das Statorelement 11` Elektromagneten 13 auf. Die Elektromagneten 13 weisen jeweils eine, im Statorelement 11` verlaufende, Spule 13a auf. Hier sind die Elektromagnete 13 zusätzlich mit statorseitigen Permanentmagneten 15 ausgestattet. In der halbkreisförmigen Aussparung des Statorelements 11` befindet sich das Aufbereitungsgefäß M mit dem Antriebsring 3, wobei der Antriebsring 3 mit dem, von Elektromagneten 13 und/oder der statorseitigen Permanentmagnete 15 erzeugten, Magnetfeld wechselwirkt. Die Wechselwirkung erfolgt entweder mit den Aussparungen 9 des Antriebsringes 3, analog einem Reluktanzantrieb, oder mit den Antriebsmagneten 7 des Antriebsringes 3. Die Anordnung der statorseitigen Elektromagnete 13 orientiert sich an der Ausführung der Ausgestaltung des Antriebsringes. Durch das Zusammenwirken der Elektromagnete 13 sowie der statorseitigen Permanentmagnete 15 mit dem Antriebsring 3 wirkt ein Drehmoment auf den Antriebsring 3 und damit auf das Aufbereitungsgefäß M, welches mit dem Antriebsring 3 über die Isolation 5 verbunden ist. Der Antrieb erfolgt somit, wie bei einem Ringmotor, mit einem halben Stator.

Die FIG 2 zeigt eine Kombination von zwei möglichen Wechselwirkung von Antriebsring 3 und Statorelement 11. Regelmäßig wird jedoch eine Wechselwirkung analog eines Reluktanzantriebes, bei dem der Antriebsring keine Permanentmagnete 7 aufweist, oder eine Wechselwirkung von Permanentmagneten 7 mit den Elektromagneten 13 zum Antrieb ausreichen. Eine besonders hohe Kraftübertragung erfolgt bei der Wechselwirkung von den Statorseitigen Elektromagneten 13, 13a mit Permanentmagneten 7, wie gezeigt. Für eine solche Ausführung ist es vorteilhaft, die Aussparungen mit einem Blechpaket auszufüllen, so dass die Permanentmagneten 7 im Blechpaket des Antriebsringes 3 integriert sind und sich eine nach außen gewandte glatte Oberfläche des Antriebsringes 3 ergibt.

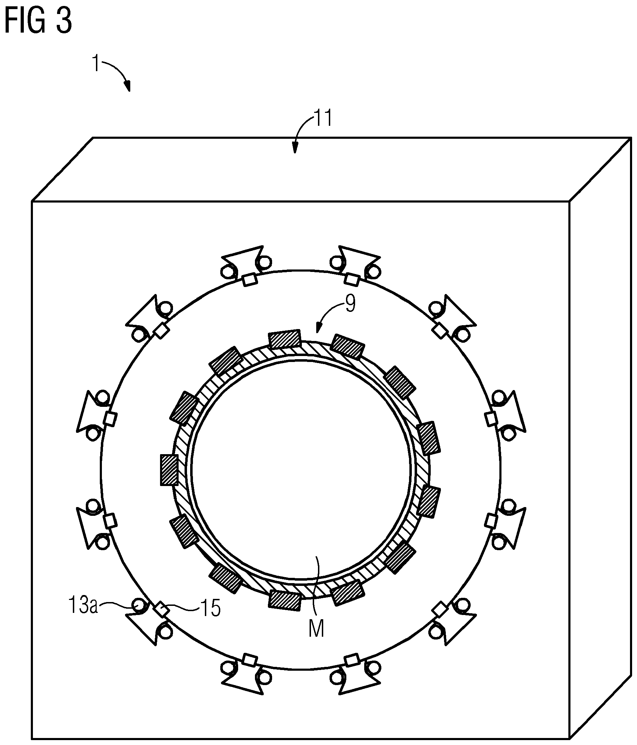

FIG 3 zeigt einen Schnitt durch ein Statorelement 11 mit einem Antriebsring 3 und einem Aufbereitungsgefäß. Im Unterschied zu dem Statorelement 11', welches in FIG 2 gezeigt ist, umschließt das hier gezeigte Statorelement 11 den gesamten Umfang des Aufbereitungsgefäßes M bzw. des Antriebsringes 3. Das Statorelement 11 besteht hier mehrheitlich aus einem Blechpaket. Ein solches Statorelement 11 ist besonders gut für einen Reluktanzantrieb geeignet. Weiter ist ein solches Statorelement 11 für ein Aufbereitungsgefäß M geeignet, welches eine vertikal ausgerichtete Drehrichtung aufweist und/oder variabel ausrichtbar ist.

Der Antriebsring 3 weist ebenfalls vorteilhaft ein Blechpacket auf. Vorteilhaft weist das Blechpacket überdies Aussparungen auf, wobei die Aussparungen zur Aufnahme weiterer Antriebsmagnete 7 geeignet sind (nicht gezeigt). So kann ggf. ein Reluktanzantrieb nachträglich mit Magneten ausgerüstet und das Drehmoment erhöht werden.

Die räumliche Fixierung des Aufbereitungsgefäßes M und/oder des Antriebsringes erfolgt vorteilhaft mit einem Wälzlager 21 (nicht gezeigt), wobei das Wälzlager 21 und/oder eine Auflage 19 zu einer bewegliche Zuordnung von Statorelement 11, 11` und Antriebsring dient. Weitere funktionelle Zusammenhänge zwischen dem Antriebsring 3 und dem Statorelement wurden schon vorstehend ausgeführt.

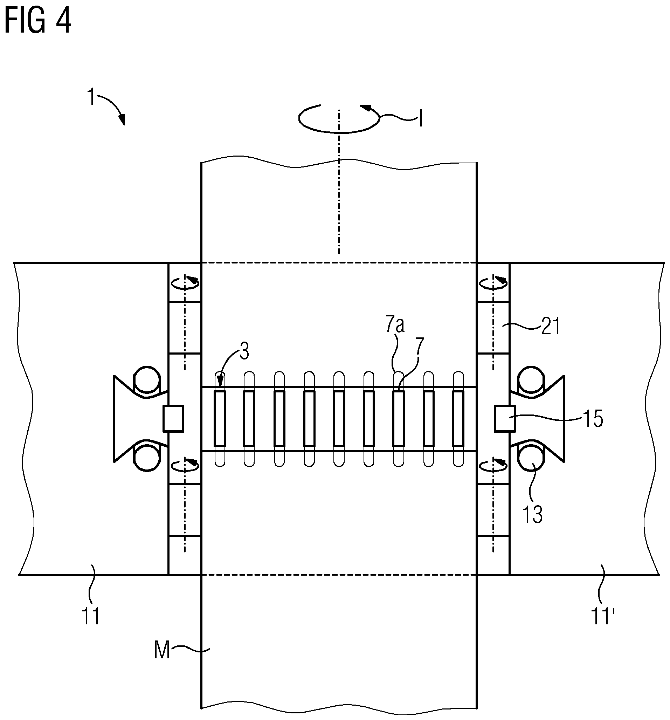

FIG 4 zeigt einen Schnitt durch einen Teil einer Vorrichtung (1) zur Aufbereitung von Stoffen. Hier ist das Aufbereitungsgefäß M mit einem, an dem Aufbereitungsgefäß befestigten Antriebsring 3 gezeigt, welches zwischen einem umfassenden Statorelement 11 oder zwischen zwei separaten Statorelementen 11' verläuft. Ein solches separates Statorelement 11' ist in FIG 2 gezeigt. Ein solches umfassendes Statorelement 11 ist in Draufsicht in FIG 3 gezeigt.

Die räumliche Fixierung des Aufbereitungsgefäßes erfolgt durch Wälzlager 21. Die Wälzlager 21 sind dem Statorelement(en) 11, 11` zugeordnet und dienen zur Fixierung des Aufbereitungsgefäßes M in seiner Position und Ausrichtung sowie zur reibungsarmen Drehbewegung.

Der Antriebsring weist neben den Antriebsmagneten 7 Antriebsspulen 7a auf, wobei die Antriebsspulen zur Erzeugung eines Magnetfeldes dienen und/oder die Antriebsmagnete unterstützen können. Die Stromversorgung der Antriebsspulen 7a ist dabei vorteilhaft wie in einem Gleichstrommotor gelöst, jedoch ist die Stromübertragung in dieser Figur der besseren Übersicht halber nicht gezeigt. Die gekrümmten Pfeile geben jeweils die Drehrichtung des Aufbereitungsgefäßes M oder der Zylinder des Wälzlagers 21 an.

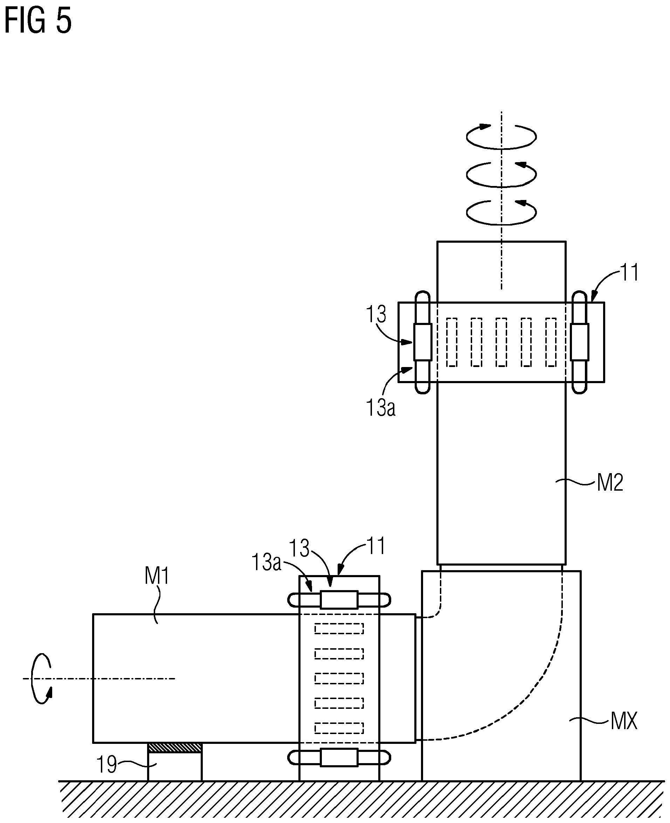

FIG 5 zeigt eine Vorrichtung 1 zur Aufbereitung von Stoffen mit zwei Aufbereitungsgefäßen M1, M2. Die Aufbereitungsgefäße M1, M2 sind durch ein Verbindungsglied MX verbunden. Ein solches Verbindungsglied MX unterstützt vorteilhaft den Übergang von Stoffen aus dem einen Aufbereitungsgefäß M1 in das weitere Aufbereitungsgefäß M2 und/oder umgekehrt. Vorteilhaft kann das Verbindungsglied MX eine Fixierung der Ausrichtung und/ oder Position des zumindest einen Aufbereitungsgefäßes M1, M2 unterstützen. Weiter kann das Verbindungsglied MX zur Positionierung und Sicherung der Ausrichtung des weiteren Aufbereitungsgefäßes M2 dienen. Das weitere Aufbereitungsgefäß M2 ist horizontal ausgerichtet. Der gekrümmte Pfeil symbolisiert die Drehrichtung des weiteren Aufbereitungsgefäßes M. Das weitere Aufbereitungsgefäß M2 kann eine andere Drehrichtung und/oder eine andere Drehgeschwindigkeit während der Aufbereitung der Stoffe aufweisen als das eine Aufbereitungsgefäß M1. Dies ist in der FIG 5 durch die beiden halbkreisförmigen Pfeile symbolisiert. Vorteilhaft wird das eine Aufbereitungsgefäß M1 mit einer Auflage 19 in Position und Ausrichtung gehalten. Zur Erzeugung der Drehbewegung der Aufbereitungsgefäße M1, M2 dienen Statorelemente 11, wobei die Statorelemente 11 die Fixierung der Ausrichtung und Position ggf. unterstützen, insbesondere mittels Wälzlagern 21 (nicht gezeigt). Das Verbindungsglied MX kann auch eine rotatorische Wirkverbindung zwischen mehreren Aufbereitungsgefäßen M1, M2 aufweisen. Beispielwiese dient ein Getriebe zum Übertrag der Rotationsbewegung von einem Aufbereitungsgefäß M1 zu zumindest einem weiteren Aufbereitungsgefäß M2.

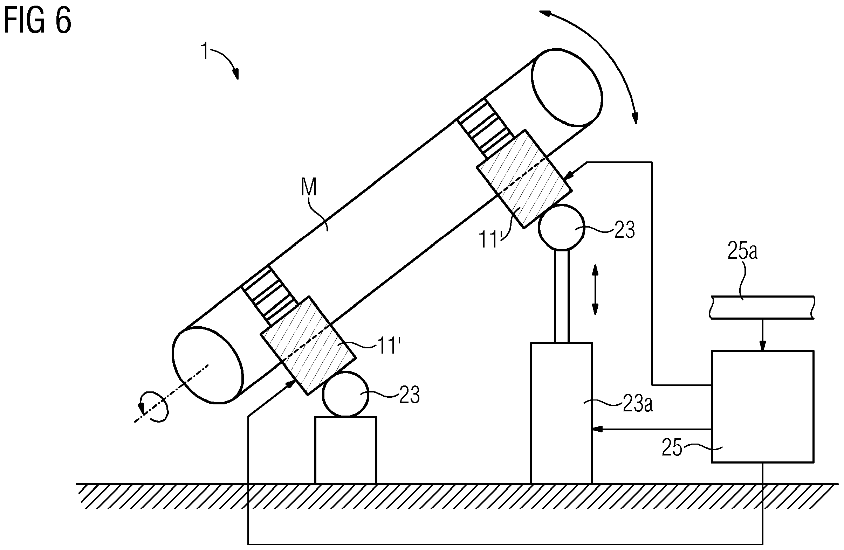

FIG 6 zeigt eine ausrichtbare Vorrichtung zur Aufbereitung von Stoffen. Hier ist das Aufbereitungsgefäß M als eine Möglichkeit lediglich mit den Statorelementen 11` fixiert. Weitere Haltevorrichtungen sind möglich, aber nicht gezeigt.

Ebenso sind (eine) Einlassöffnung(en) für den zumindest einen aufzubereitenden Stoff oder (eine) Auslassöffnung(en) für den zumindest einen aufbereiteten Stoff an dem Aufbereitungsgefäß ggf. vorhanden, jedoch nicht gezeigt.

Die Ausrichtung des Aufbereitungsgefäßes erfolgt durch ein Verstellglied 23a, welches über Gelenke 23 mit den Statorelementen 11' verbunden ist. Möglich ist es auch, weitere Statorelemente 11, 11' über ein Gelenk 23 mit einem Verstellglied 23a in der Höhe und/oder in der Position/Ausrichtung verstellbar zu gestalten. Vorteilhaft ist mit einer solchen gezeigten Einrichtung eine Änderung der Ausrichtung des Aufbereitungsgefäßes M während der Aufbereitung der Stoffe möglich. Die Möglichkeit der Ausrichtung des Aufbereitungsgefä-ßes ist durch den gebogenen Doppelpfeil symbolisiert. Die Drehbewegung des Aufbereitungsgefäßes M ist durch den gebogenen Pfeil an der Drehachse symbolisiert.

Die Steuerung und/oder Regelung der Drehrichtung, des Drehmoments und/oder der Ausrichtung erfolgt über die Steuerungseinrichtung 25. Die Steuerungseinrichtung 25 ist vorteilhaft mit einer technischen Datenverbindung 25a der Steuerung der Anlage, bei dem bevorzugten Einsatz einer Papiermaschine, verbunden. Der Pfeil neben dem Verstellglied 23a symbolisiert die Verstellmöglichkeit des Verstellgliedes 23a. Die Steuerungseinrichtung 25 ist vorteilhaft mit einem Ventil verbunden, welches die Positionierung/Ausrichtung des Gelenkes 23 und/oder des Statorelements 11` einstellt. Vorteilhaft verfügt die Steuerungseinheit über einen Umrichter, so dass durch eine direkte Verbindung mit dem Statorelement 11` die Bewegung des Aufbereitungsgefäßes M gesteuert werden kann. Optional kann die Steuerungseinrichtung 25 mit Sensoren (der Übersicht halber nicht gezeigt) verbunden sein, wobei die Sensoren eine Regelung der Drehzahl, des Drehmomentes, einer Positionierung und/oder Ausrichtung des Aufbereitungsgefäßes M unterstützen. Dabei kann die Steuerungseinrichtung 25 mit einer Regeleinrichtung ergänzt werden.

Zusammenfassend betrifft die Erfindung eine Vorrichtung 1 und ein Verfahren zur Aufbereitung von Stoffen, insbesondere von Rohstoffen bei der Papierherstellung, vorzugsweise aufweisend einen Pulper oder eine Auflösetrommel, aufweisend ein um eine Achse (Rotationsachse) rotierbares Aufbereitungsgefäß M, M1, M2, wobei das Aufbereitungsgefäß M, M1, M2 zumindest einen Antriebsring 3 aufweist, wobei der Antriebsring 3 fest mit dem Aufbereitungsgefäß M, M1, M2 verbunden ist, wobei der Antriebsring 3 im Zusammenwirken mit zumindest einem Statorelement 11, 11` zur rotierenden Bewegung vorgesehen ist, wobei das Statorelement 11, 11` Elektromagnete 13 aufweist, wobei die Elektromagnete 13 zur Erzeugung eines Drehmoments des Aufbereitungsgefäßes M, M1, M2 vorgesehen ist. Zur Erzeugung des Drehmomentes, das auf das Aufbereitungsgefäß M, M1, M2 wirkt, weist der Antriebsring 3 entweder Antriebsmagnete 7, insbesondere Permanentmagnete, oder Aussparungen 9 auf. Falls der Antriebsring 3 Permanentmagnete aufweist, entspricht die Antriebseinheit einer Synchronmaschine. Falls der Antriebsring 3 Aussparungen 9 aufweist, entspricht die Antriebseinheit einem Reluktanz-Ringmotor. Vorteilhaft ist die Position und/ oder Ausrichtung des Aufbereitungsgefäßes M, M1, M2 veränderbar. Weiter vorteilhaft sind die antriebsrelevanten Grö-ßen wie Drehmoment, Drehzahl, Position und/oder Ausrichtung des Aufbereitungsgefäßes M, M1, M2 mittels einer Steuerungseinrichtung 25 steuerbar oder regelbar.

## Patentansprüche

1. Vorrichtung (1) zur Aufbereitung von Stoffen, insbesondere von Rohstoffen bei der Papierherstellung, aufweisend zumindest ein Aufbereitungsgefäß (M, M1, M2), wobei das Aufbereitungsgefäß (M, M1, M2) mit Hilfe zumindest einer Auflage (19) drehbar gelagert ist, wobei das Aufbereitungsgefäß (M, M1, M2) zumindest einen Antriebsring (3) aufweist, wobei der zumindest eine Antriebsring (3) fest mit dem Aufbereitungsgefäß (M, M1, M2) verbunden ist, wobei der Antriebsring (3) Mittel (7, 7a, 9) zur Umwandlung von einem Magnetfeld in ein Drehmoment aufweist, wobei der Antriebsring (3) im Zusammenwirken mit jeweils zumindest einem Statorelement (11) zur Erzeugung einer Drehbewegung des Aufbereitungsgefäßes (M, M1, M2) vorgesehen ist, wobei das zumindest eine Statorelement (11, 11`) Magnete und/oder Statorspulen (13a) aufweist und wobei die Magnete (13) und/oder Statorspulen (13a) des zumindest einen Statorelements (11, 11`) in Zusammenwirken mit den Mitteln (7, 7a, 9) zur Umwandlung eines Magnetfeldes zu einer Drehbewegung des zumindest einen Antriebsringes (3) zur Erzeugung der Drehbewegung des Aufbereitungsgefäßes (M, M1, M2) vorgesehen ist.

2. Vorrichtung (1) nach Anspruch 1, wobei der Antriebsring (3) als Mittel (7, 7a, 9) zur Umwandlung des Magnetfeldes in ein Drehmoment Antriebsmagnete (7), Aussparungen (9) und/oder zumindest eine Antriebsspule (7a) aufweist.

3. Vorrichtung (1) nach einem der vorangehenden Ansprüche, wobei eine Isolation (5) zwischen dem Antriebsring (3) und dem Aufbereitungsgefäß (M, M1, M2) vorgesehen ist.

4. Vorrichtung (1) nach einem der vorangehenden Ansprüche, wobei zumindest eines der Statorelemente (11, 11') den Antriebsring (3) nur teilweise abdeckt.

5. Vorrichtung (1) nach einem der vorangehenden Ansprüche, wobei das Aufbereitungsgefäß (M, M1, M2) und die Statorelemente (11, 11`) in Position und/oder Ausrichtung veränderbar sind.

6. Vorrichtung (1) nach einem der vorangehenden Ansprüche, wobei für die Positionierung des Aufbereitungsgefäßes (M, M1, M2) die zumindest eine Auflage (19) vorgesehen ist.

7. Vorrichtung (1) nach einem der vorangehenden Ansprüche, wobei die zumindest eine Auflage (19) Teil des zumindest einen Statorelements (11, 11`) ist.

8. Vorrichtung (1) nach einem der vorangehenden Ansprüche, wobei zwischen einem Aufbereitungsgefäß (M1) und einem weiteren Aufbereitungsgefäß (M2) ein Verbindungsglied (MX) vorgesehen ist.

9. Vorrichtung (1) nach einem der vorangehenden Ansprüche, wobei das zumindest eine Aufbereitungsgefäß ein Pulper, eine Auflösetrommel oder eine Kegelschleuder ist.

10. Vorrichtung (1) nach einem der vorangehenden Ansprüche 1 bis 9, aufweisend eine Steuerungseinheit (25), wobei die Steuerungseinheit (25) zur Steuerung der Drehbewegung, insbesondere der Drehzahl und/oder des Drehmoments, des zumindest einen Aufbereitungsgefäßes (M, M1, M2) vorgesehen ist.

11. Vorrichtung nach Anspruch 10, wobei die Steuerungseinheit (25) zudem die Positionierung und/oder die Ausrichtung des zumindest einen Aufbereitungsgefäßes (M, M1, M2) steuert oder regelt.

12. Verwendung einer Antriebseinheit für eine Vorrichtung (1) gemäß einem der Ansprüche 1 bis 11 zur Aufbereitung von Stoffen, insbesondere von Rohstoffen bei der Herstellung von Papier, in zumindest einem Aufbereitungsgefäß (M, M1, M2), wobei das zumindest eine Aufbereitungsgefäß (M, M1, M2) drehbar gelagert ist, aufweisend:
- Zumindest ein Statorelement (11, 11'), wobei das Statorelement (11, 11') Magnete (13) und/oder Statorspulen (13a) aufweist,
- zumindest einen Antriebsring (3), wobei der Antriebsring (3) zumindest einem Statorelement (11, 11') zugeordnet ist, wobei der Antriebsring (3) Mittel (7, 7a, 9) zur Umwandlung eines Magnetfeldes in ein Drehmoment aufweist und wobei der zumindest eine Antriebsring (3) zur Befestigung an dem zumindest einem Aufbereitungsgefäß (M, M1, M2) vorgesehen ist,
- optional eine Steuerungseinrichtung (25), wobei die Steuerungseinrichtung (25) zur Steuerung oder Regelung einer Drehbewegung des zumindest einen Mischgefäßes (M, M1, M2) und optional zur Steuerung der Position und/oder Ausrichtung des zumindest einen Mischgefäßes (M, M1, M2) vorgesehen ist.

13. Verfahren zur Aufbereitung von Stoffen, insbesondere von Rohstoffen bei der Papierherstellung, wobei zur Aufbereitung der Stoffe eine Vorrichtung (1) gemäß einem der Ansprüche 1 bis 11 dient.

## Claims

1. Device (1) for processing materials, in particular raw materials in paper manufacturing, having at least one processing vessel (M, M1, M2), wherein the processing vessel (M, M1, M2) is rotatably mounted with the aid of at least one support (19), wherein the processing vessel (M, M1, M2) has at least one driving ring (3), wherein the at least one driving ring (3) is fixedly connected to the processing vessel (M, M1, M2), wherein the driving ring (3) has means (7, 7a, 9) for converting a magnetic field into a torque, wherein the driving ring (3) when interacting with in each case at least one stator element (11) is provided for generating a rotating movement of the processing vessel (M, M1, M2), wherein the at least one stator element (11, 11') has magnets and/or stator coils (13a) and wherein the magnets (13) and/or stator coils (13a) of the at least one stator element (11, 11') when interacting with the means (7, 7a, 9) for converting a magnetic field into a rotating movement of the at least one driving ring (3) are provided for generating the rotating movement of the processing vessel (M, M1, M2).

2. Device (1) according to Claim 1, wherein the driving ring (3) as means (7, 7a, 9) for converting the magnetic field into a torque has driving magnets (7), cutouts (9) and/or at least one driving coil (7a).

3. Device (1) according to either of the preceding claims, wherein an insulation (5) is provided between the driving ring (3) and the processing vessel (M, M1, M2).

4. Device (1) according to one of the preceding claims, wherein at least one of the stator elements (11, 11') only partially covers the driving ring (3).

5. Device (1) according to one of the preceding claims, wherein the processing vessel (M, M1, M2) and the stator elements (11, 11') are variable in terms of position and/or alignment.

6. Device (1) according to one of the preceding claims, wherein the at least one support (19) is provided for the positioning of the processing vessel (M, M1, M2).

7. Device (1) according to one of the preceding claims, wherein the at least one support (19) is part of the at least one stator element (11, 11').

8. Device (1) according to one of the preceding claims, wherein a connecting member (MX) is provided between the processing vessel (M1) and a further processing vessel (M2).

9. Device (1) according to one of the preceding claims, wherein the at least one processing vessel is a pulper, a drum pulper or a conical centrifuge.

10. Device (1) according to one of the preceding Claims 1 to 9, having a control unit (25), wherein the control unit (25) is provided for controlling the rotating movement, in particular the rotating speed and/or the torque, of the at least one processing vessel (M, M1, M2).

11. Device according to Claim 10, wherein the control unit (25) moreover controls in an open loop or a closed loop the positioning and/or the alignment of the at least one processing vessel (M, M1, M2).

12. Use of a drive unit for a device (1) according to one of Claims 1 to 11 for processing materials, in particular raw materials in paper manufacturing, in at least one processing vessel (M, M1, M2), wherein the at least one processing vessel (M, M1, M2) is rotatably mounted, having:
- at least one stator element (11, 11'), wherein the stator element (11, 11') has magnets (13) and/or stator coils (13a),
- at least one driving ring (3), wherein the driving ring (3) is assigned to at least one stator element (11, 11'), wherein the driving ring (3) has means (7, 7a, 9) for converting a magnetic field into a torque and wherein the at least one driving ring (3) is provided for fastening to the at least one processing vessel (M, M1, M2),
- optionally a control device (25), wherein the control device (25) is provided for controlling in an open loop or a closed loop a rotating movement of the at least one mixing vessel (M, M1, M2) and optionally for controlling the position and/or alignment of the at least one mixing vessel (M, M1, M2).

13. Method for processing materials, in particular raw materials in paper manufacturing, wherein a device (1) according to one of Claims 1 to 11 serves for processing the materials.

## Revendications

1. Installation (1) de préparation de matière, en particulier de matières premières dans la fabrication du papier, comportant au moins un récipient (M, M1, M2) de préparation, dans laquelle le récipient (M, M1, M2) de préparation est monté tournant à l'aide d'au moins un support (19), dans laquelle le récipient (M, M1, M2) de préparation a au moins un anneau (3) d'entraînement, dans laquelle le au moins un anneau (3) d'entraînement est solidaire du récipient (M, M1, M2) de traitement, dans laquelle l'anneau (3) d'entraînement a des moyens (7, 7a, 9) de transformation d'un champ magnétique en un couple, dans laquelle l'anneau (3) d'entraînement est, en coopération avec respectivement un élément (11) statorique, prévu pour la production d'un mouvement de rotation du récipient (M, M1, M2) de préparation, dans laquelle le au moins un élément (11, 11') statorique comporte des aimants et/ou des bobines (13a) statoriques et dans laquelle les aimants (13) et/ou les bobines (13a) statoriques du au moins un élément (11, 11') statorique sont, en coopération avec les moyens (7, 7a, 9) de transformation d'un champ magnétique en un mouvement de rotation du au moins un anneau (3) d'entraînement, prévus pour la production du mouvement de rotation du récipient (M, M1, M2) de préparation.

2. Installation (1) suivant la revendication 1, dans laquelle l'anneau (3) d'entraînement a, comme moyens (7, 7a, 9) de transformation du champ magnétique en un couple, des aimants (7) d'entraînement, des évidements (9) et/ou au moins une bobine (7a) d'entraînement.

3. Installation (1) suivant l'une des revendications précédentes, dans laquelle il est prévu une isolation (5) entre l'anneau (3) d'entraînement et le récipient (M, M1, M2) de préparation.

4. Installation (1) suivant l'une des revendications précédentes, dans laquelle au moins l'un des éléments (11, 11') statoriques ne recouvre que partiellement l'anneau (3) d'entraînement.

5. Installation (1) suivant l'une des revendications précédentes, dans laquelle le récipient (M, M1, M2) de préparation et les éléments (11, 11') statoriques peuvent être modifiés en position et/ou en orientation.

6. Installation (1) suivant l'une des revendications précédentes, dans laquelle le au moins un support (19) est prévu pour la mise en position du récipient (M, M1, M2) de préparation.

7. Installation (1) suivant l'une des revendications précédentes, dans laquelle le au moins un support (19) fait partie du au moins un élément (11, 11') statorique.

8. Installation (1) suivant l'une des revendications précédentes, dans laquelle un organe (MX) de liaison est prévu entre le récipient (M1) de préparation et un autre récipient (M2) de préparation.

9. Installation (1) suivant l'une des revendications précédentes, dans laquelle le au moins un récipient de préparation est un pulpeur, un tambour désintégrateur ou un épurateur centrifuge.

10. Installation (1) suivant l'une des revendications 1 à 9 précédentes, comportant une unité (25) de commande, dans laquelle l'unité (25) de commande est prévue pour la commande du mouvement de rotation, en particulier de la vitesse de rotation et/ou du couple du au moins un appareil (M, M1, M2) de préparation.

11. Installation suivant la revendication 10, dans laquelle l'unité (25) de commande commande ou règle en outre la mise en position et/ou l'orientation du au moins un récipient (M, M1, M2) de préparation.

12. Utilisation d'une unité d'entraînement pour une installation (1) suivant l'une des revendications 1 à 11 de préparation de matière, en particulier de matières premières dans la fabrication du papier, dans au moins un récipient (M, M1, M2) de préparation, dans laquelle le au moins un récipient (M, M1, M2) de préparation est monté tournant, comportant :
- au moins un élément (11, 11') statorique, dans laquelle l'élément (11, 11') statorique comprend des éléments (13) et/ou des bobines (13a) statoriques,
- au moins un anneau (3) d'entraînement, dans laquelle l'anneau (3) d'entraînement est affecté à au moins un élément (11, 11') statorique, dans laquelle l'anneau (3) d'entraînement comporte des moyens (7, 7a, 9) de transformation d'un champ magnétique en un couple et dans laquelle le au moins un anneau (3) d'entraînement est prévu pour la fixation au au moins un récipient (M, M1, M2) de préparation,
- éventuellement un dispositif (25) de commande, dans laquelle le dispositif (25) de commande est prévu pour la commande ou le réglage d'un mouvement de rotation du au moins un récipient (M, M1, M2) de mélange et éventuellement pour la commande de la position et/ou de l'orientation du au moins un récipient (M, M1, M2) de mélange.

13. Procédé de préparation de matière, en particulier de matières premières dans la fabrication du papier, dans lequel on se sert d'une installation (1) suivant l'une des revendications 1 à 11 pour la préparation des matières.
